(19) Europäisches Patentamt / European Patent Office / Office européen des brevets

(11) **EP 3 878 738 B1**

(12) **FASCICULE DE BREVET EUROPEEN**

(45) Date de publication et mention
de la délivrance du brevet:
**07.05.2025 Bulletin 2025/19**

(21) Numéro de dépôt: **21161209.8**

(22) Date de dépôt: **08.03.2021**

(51) Classification Internationale des Brevets (IPC):
**G05D 1/00** (2024.01)    **B64C 27/22** (2006.01)
**B64C 27/26** (2006.01)    **B64C 27/82** (2006.01)
**B64C 27/57** (2006.01)

(52) Classification Coopérative des Brevets (CPC):
**B64C 27/22; B64C 27/26; B64C 27/57;**
**B64C 27/82; G05D 1/495;** B64C 2027/8272;
G05D 2105/22; G05D 2109/24

(54) **PROCÉDÉ DE COMMANDE D'AU MOINS UN ORGANE AÉRODYNAMIQUE DE DÉRIVE D'UN HÉLICOPTÈRE HYBRIDE ET UN HÉLICOPTÈRE HYBRIDE**

VERFAHREN ZUR STEUERUNG MINDESTENS EINES AERODYNAMISCHEN SEITENRUDERS EINES HYBRIDHUBSCHRAUBERS UND ENTSPRECHENDER HYBRIDHUBSCHRAUBER

METHOD FOR CONTROLLING AT LEAST ONE AERODYNAMIC RUDDER OF A HYBRID HELICOPTER AND HYBRID HELICOPTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2020 FR 2002441**

(43) Date de publication de la demande:
**15.09.2021 Bulletin 2021/37**

(73) Titulaire: **Airbus Helicopters**
**13725 Marignane Cedex (FR)**

(72) Inventeurs:
• **EGLIN, Paul**
**13830 ROQUEFORT LA BEDOULE (FR)**
• **HUOT, Rémy**
**13008 MARSEILLE (FR)**
• **CONROY, Antoine**
**13127 VITROLLES (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
FR-A1- 2 689 854      FR-A1- 2 769 284
FR-A1- 2 943 620      FR-A1- 3 014 411
US-A1- 2018 244 369

EP 3 878 738 B1

**Description**

La présente invention concerne un procédé de commande d'au moins un organe aérodynamique de dérive d'un hélicoptère hybride et aussi un hélicoptère hybride appliquant ce procédé. L'invention se situe dans le domaine technique des systèmes de commande d'un hélicoptère hybride.

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E

Un type de giravion est dénommé « hélicoptère hybride » par commodité en raison de sa spécificité. Un hélicoptère hybride comporte une cellule portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un hélicoptère hybride comprend de plus au moins une hélice, possiblement de type hélice tractive ou propulsive. Par exemple, l'hélicoptère hybride peut être pourvu d'au moins deux hélices agencées transversalement de part et d'autre d'une cellule et de son plan antéropostérieur.

Par ailleurs, un hélicoptère hybride comporte une installation motrice pour mettre en mouvement la ou les hélices et le rotor de sustentation, éventuellement en permanence hors cas de panne ou d'essais.

Pour piloter un hélicoptère hybride, un pilote de l'hélicoptère hybride peut manœuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

Notamment sur un hélicoptère hybride à au moins deux hélices situées de part et d'autre d'une cellule, le pas des pales de chaque hélice est fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, l'hélicoptère hybride inclut au moins une commande de la poussée apte à modifier la valeur de la composante de pas moyen, via une architecture mécanique et/ou électrique par exemple.

Par exemple, la commande de poussée peut prendre la forme d'un levier ou d'un bouton transmettant un signal à un ou plusieurs actionneurs. Selon un exemple, un tel bouton peut présenter trois états discrets à savoir un premier état dit « beep+ » requérant une augmentation de la valeur de la composante de pas moyen, un deuxième état dit « beep- » requérant une baisse de la valeur de la composante de pas moyen et un troisième état requérant de ne pas modifier la valeur de la composante de pas moyen. Le pas des pales des hélices est alors augmenté tant qu'un pilote positionne le bouton dans son premier état. Selon un autre exemple, le bouton peut prendre la forme d'une molette.

Par ailleurs, des fonctions de contrôle de direction notamment en lacet peuvent être réalisées par l'utilisation d'une commande de lacet apte à modifier la valeur de la composante de pas différentiel. Par exemple, une telle commande de lacet peut comprendre un palonnier relié par une architecture mécanique et/ou électrique aux hélices. Le palonnier permet de modifier la valeur de la composante de pas différentiel.

Des exemples d'hélicoptères hybrides sont décrits dans les documents US 8181901, US 8170728, US 8052094 et US 8113460 par exemple.

Sur un hélicoptère hybride muni de deux hélices qui participent au contrôle de la position et du mouvement en lacet, les deux hélices peuvent générer deux poussées différentes afin d'engendrer un couple sur la cellule de l'aéronef.

Cette stratégie est intéressante mais peut de fait induire des cycles de vie différents sur les divers organes mobiles mettant en mouvement les pales des hélices.

Pour y remédier, le document FR 2943620 propose de réguler un l'angle de braquage de volets de dérive gauche et droit durant des phases de vol prédéterminées pour tendre à minimiser la composante de pas différentiel des hélices gauche et droite afin d'optimiser le fonctionnement de ces hélices gauche et droite.

Par commodité et dans la suite du texte, on considère que la gauche d'un aéronef se trouve à la gauche d'un individu se trouvant dans ledit aéronef et tournant le dos à l'arrière de l'aéronef de manière à regarder l'avant de l'aéronef. De fait, on considère que la droite d'un aéronef se trouve à la droite d'un individu se trouvant dans ledit aéronef et tournant le dos à l'arrière de l'aéronef de manière à regarder l'avant de l'aéronef. La régulation est effectuée par le biais d'une première boucle fermée de régulation en fonction d'une différence de couples, de puissances ou de pas.

Le braquage des volets gauche et droit peut s'accompagner d'une deuxième boucle de régulation fermée pour piloter les hélices afin d'atteindre un facteur de charge latéral nul. Dès lors, les première et deuxième boucles de régulation peuvent tendre à fonctionner en interaction mutuelle dans certaines conditions.

Les documents FR 2769284, FR 3014411, FR 2689854 et US 2018/244369 sont aussi connus et éloignés de l'invention en concernant des hélicoptères usuels dépourvus d'hélices.

La présente invention a alors pour objet de proposer un procédé alternatif permettant d'optimiser le fonctionnement des hélices d'un hélicoptère hybride ayant un rotor de sustentation entraîné par une installation motrice durant au moins une phase de vol.

Ainsi, l'invention vise un procédé pour optimiser le fonctionnement d'au moins une première hélice et d'au moins une deuxième hélice disposées transversalement de part et d'autre d'une cellule d'un hélicoptère hybride, ledit hélicoptère hybride comportant un rotor de sustentation agencé au dessus de la cellule, ledit hélicoptère hybride comportant au moins un organe aérodynamique de dérive exerçant une portance transversale, ledit au moins un organe aérodynamique de dérive étant mobile en rotation par rapport à un portant dudit hélicoptère hybride.

Un tel organe aérodynamique de dérive peut prendre la forme d'un empennage entièrement braquable ou d'un volet de dérive braquable d'un empennage par exemple.

Ce procédé comporte l'étape suivante durant une phase de régulation : braquage avec un système de pilotage automatique dudit au moins un organe aérodynamique de dérive dans une position de consigne présentant par rapport à une position de référence un angle de braquage cible, ledit angle de braquage cible étant égal à un angle de braquage de consigne au moins lorsque cet angle de braquage de consigne est compris dans une plage délimitée par un angle minimal inclus et un angle maximal inclus prédéterminés.

Eventuellement, l'angle de braquage cible peut être égal audit angle maximal prédéterminé lorsque cet angle de braquage de consigne est supérieur à l'angle maximal prédéterminé. Eventuellement, l'angle de braquage cible peut être égal audit angle minimal prédéterminé lorsque cet angle de braquage de consigne est inférieur à l'angle minimal prédéterminé. L'angle de braquage de consigne peut aussi être borné.

L'angle de braquage de consigne est calculé par le système de pilotage automatique pour compenser un couple exercé par ledit rotor de sustentation à dérapage latéral nul.

L'angle de braquage est par convention positif lorsque l'organe aérodynamique de dérive se trouve d'un premier côté de la position de référence et négatif lorsque l'organe aérodynamique de dérive se trouve d'un deuxième côté de la position de référence.

Par suite, l'hélicoptère hybride est muni d'un ou plusieurs organes aérodynamiques de dérive pouvant permettre d'introduire un moment de lacet sur la cellule. Le ou les organes aérodynamiques de dérive sont pilotés par le système de pilotage automatique pour tendre à atteindre un angle de braquage de consigne. Par suite, le braquage peut être réalisé par le biais d'une boucle ouverte de régulation qui ne risque ainsi pas d'entrer en conflit avec une éventuelle boucle fermée de régulation d'une composante de pas différentiel des hélices pour obtenir un facteur de charge latéral nul.

L'angle de braquage de consigne est ainsi calculé pour compenser exactement le couple exercé par ledit rotor de sustentation sur la cellule à dérapage latéral nul afin que le premier pas des premières pales de la première hélice et le deuxième pas des deuxièmes pales de la deuxième hélice tendent à avoir une composante de pas différentiel nul. L'angle de braquage de consigne et/ou l'angle de braquage cible est écrêté / borné le cas échéant par l'angle maximal et l'angle minimal.

Dès lors, la valeur de l'angle de braquage cible peut varier conjointement avec des variations du couple exercé par le rotor de sustentation sur la cellule ou avec la pression dynamique. De telles variations peuvent résulter d'une action d'un pilote sur une commande de pas collectif ou de pas cyclique du rotor de sustentation ou d'une action équivalente entreprise par le système de pilotage automatique.

Par suite, la régulation en boucle ouverte de l'angle de braquage du ou des organes aérodynamiques de dérive peut permettre d'obtenir sensiblement le même pas sur chaque hélice et donc un comportement optimal au niveau de leur point de fonctionnement. En effet, le premier pas des premières pales de la première hélice peut être proche voire égal au deuxième pas des deuxièmes pales de la deuxième hélice. La première hélice et la deuxième hélice peuvent en outre être identiques.

On rappelle que le pas d'une pale d'une hélice représente un angle entre une ligne d'une section de la pale et une ligne de référence, cet angle variant lorsque la pale tourne sur elle-même autour de son axe de pas. Par exemple, le pas représente un angle séparant une ligne de corde d'une section par rapport à une position de référence de cette ligne de corde. Par exemple, ladite section peut être une section située à une distance de l'axe de rotation de l'hélice égale à 0.75 fois un rayon de l'hélice.

Le procédé peut de plus comporter une ou plusieurs des caractéristiques qui suivent.

Ainsi, le procédé peut comporter l'étape suivante : calcul avec le système de pilotage automatique dudit angle de braquage de consigne en fonction au moins d'une vitesse d'avancement de l'hélicoptère hybride, d'un couple exercé par le rotor de sustentation sur la cellule et d'une masse volumique de l'air entourant l'hélicoptère hybride.

Par suite, si l'altitude ou la vitesse de l'hélicoptère hybride change, l'angle de braquage de l'organe aérodynamique de dérive est automatiquement modifié, du moins tant que cet organe aérodynamique de dérive n'atteint pas une butée. De même, une modification du couple exercé par le rotor de sustentation sur la cellule induit une modification de l'angle de braquage de consigne. La première poussée peut alors rester sensiblement égale à la deuxième poussée.

Par exemple, le procédé peut comporter une étape de calcul avec le système de pilotage automatique dudit angle de braquage de consigne par la relation suivante :

$$deltaV=(C/(0.5*ro*v²)-N1)/N2,$$

où « deltaV » représente ledit angle de braquage de consigne, « C » représente un couple exercé par le rotor de sustentation sur la cellule, « $V^2$ » une vitesse d'avancement de l'hélicoptère hybride à la puissance deux, « ro » représente une masse volumique de l'air, « $0.5*ro*v2$ » représente une pression dynamique, « N1 » représente un premier coefficient fonction d'un moment aérodynamique N0 de lacet de l'hélicoptère hybride à dérapage nul et lorsque ledit au moins un organe aérodynamique de dérive est dans la position de référence réduit par la pression dynamique, « N2 » représente un deuxième coefficient égal à une constante, « / » représente le signe de la division, « - » représente le signe de la soustraction, « * » représente le signe de la multiplication, « = » représente le signe de l'égalité.

En effet, le moment de lacet M généré par la cellule et notamment via le ou les organes aérodynamiques de dérive peut être déterminé comme pour un avion par l'équation suivante :

$$M = 0.5*ro*V²*(N1 + N2*deltaV)$$

Dès lors, pour égaliser entre elles et en croisière la poussée des hélices à dérapage nul, le moment de lacet doit compenser exactement le couple exercé par le rotor de sustentation pour ne pas avoir à produire une poussée différentielle entre les hélices soit M = C. On en déduit la relation précédente:

$$deltaV=(C/(0.5*ro*v²)-N1)/N2)$$

Le premier coefficient est fonction d'un terme dépendant du moment aérodynamique N0 de lacet de l'hélicoptère hybride à dérapage nul et lorsque ledit au moins un organe aérodynamique de dérive est dans la position de référence réduit par la pression dynamique q soit N0/q. Ce terme N0/q peut être une constante déterminée par essais en soufflerie et/ou par calculs et/ou par simulations.

De même, le deuxième coefficient N2 peut représenter un gradient dudit moment aérodynamique de lacet de l'hélicoptère hybride par degré de braquage dudit au moins un organe aérodynamique de dérive et peut être déterminé par essais en soufflerie et/ou par calculs et/ou par simulations.

Selon une première alternative, le premier coefficient est égal au moment aérodynamique de lacet de l'hélicoptère hybride à dérapage nul et lorsque ledit au moins un organe aérodynamique de dérive est dans la position de référence réduit par la pression dynamique.

Selon une deuxième alternative, le premier coefficient peut être égal au moment aérodynamique de lacet de l'hélicoptère hybride à dérapage nul et lorsque ledit au moins un organe aérodynamique de dérive est dans la position de référence réduit par la pression dynamique et corrigé par un correcteur de type intégral, ce correcteur étant fonction d'un gain ainsi que d'une soustraction soit d'un premier pas PAS1 de premières pales de ladite au moins une première hélice moins un deuxième pas PAS2 de deuxièmes pales de ladite au moins une deuxième hélice soit d'une première poussée P1 exercée par ladite au moins une première hélice moins une deuxième poussée P2 exercée par ladite au moins une deuxième hélice soit d'un premier couple Tq1 exercé par ladite au moins une première hélice moins un deuxième couple Tq2 exercé par ladite au moins une deuxième hélice.

L'hélicoptère hybride peut être sujet à des interactions aérodynamiques susceptibles d'affecter le premier coefficient. Pour prendre en considération ces interactions, un correcteur en forme de terme intégral peut être ajouté au coefficient aérodynamique de lacet réduit par la pression dynamique, à dérapage nul et lorsque ledit au moins un organe aérodynamique de dérive est dans la position de référence, pour optimiser l'efficacité du procédé.

Eventuellement, le correcteur peut être écrêté pour éviter d'augmenter en valeur absolue indéfiniment quand l'angle maximal de l'organe aérodynamique de dérive est atteint par exemple. Possiblement, la valeur du correcteur est limitée dans une plage de valeurs plus restreinte que la plage délimitée par l'angle minimal et l'angle maximal. A titre illustratif, l'angle de braquage de consigne peut être compris entre -8 degrés et +8 degrés autour de la position de référence, le correcteur pouvant uniquement être compris entre -2 degrés et + 2 degrés.

Par exemple, ledit premier coefficient est déterminé par la relation suivante :

$$N1=(N0/q)+k*int(diff),$$

où « N1 » représente le premier coefficient, « N0/q » représente le moment aérodynamique N0 de lacet de l'hélicoptère hybride réduit par la pression dynamique q à dérapage nul et lorsque ledit au moins un organe aérodynamique de dérive est dans la position de référence, « diff » représente ladite soustraction , « k » représente un gain prédéterminé, « - » représente le signe de la soustraction, « + » représente le signe de l'addition, « * » représente le signe de la multiplication, « = » représente le signe de l'égalité, « k*int(diff) » représente le correcteur de type intégral égal au produit dudit gain prédéterminé et d'une intégrale par rapport au temps de ladite soustraction.

Le gain k peut être réglé pour éviter une interaction avec une boucle de régulation du facteur de charge latéral.

Eventuellement, le gain peut varier en fonction d'une vitesse d'avancement de l'hélicoptère hybride.

Le gain k peut être fonction de la vitesse d'avancement, par exemple de la vitesse air vraie ou de la vitesse air indiquée. Le gain peut notamment être réduit à grande vitesse quand l'efficacité de l'organe aérodynamique de dérive est maximale.

Selon un aspect, le correcteur peut toutefois être figé lorsque l'hélicoptère hybride est dans une phase de pilotage dynamique.

Le terme « figé » signifie que le correcteur dans son ensemble conserve la valeur atteinte lorsque l'hélicoptère hybride rentre dans une phase de pilotage dynamique. Le correcteur peut à nouveau varier à l'issue de la phase de pilotage dynamique.

Le procédé peut comporter une étape de détection d'une phase de pilotage dynamique si au moins une des conditions suivantes est satisfaite :

- manœuvre d'une commande de lacet configurée pour modifier une composante de pas différentiel du premier pas de premières pales de ladite au moins une première hélice et du deuxième pas de deuxièmes pales de ladite au moins une deuxième hélice,

- une valeur absolue d'un facteur de charge selon une direction transversale dans un référentiel de l'hélicoptère hybride est supérieure à un seuil de facteur de charge,

- une valeur absolue d'un angle de roulis de l'hélicoptère hybride est supérieure à un seuil de roulis.

Par exemple, le seuil de facteur de charge peut être égal à 0.07 fois l'accélération de la pesanteur.

Par exemple le seuil de roulis peut être compris entre 10 et 40 degrés.

De même, une zone morte qui fige le correcteur de type intégral peut être mise en place dans certaines conditions.

Par exemple, le correcteur peut être figé lorsqu'une valeur absolue d'une différence est inférieure à un seuil de figement, ladite différence étant égale :

- au premier pas PAS1 de premières pales de ladite au moins une première hélice moins le deuxième pas PAS2 de deuxièmes pales de ladite au moins une deuxième hélice soit PAS1-PAS2,

- ou à une première poussée P1 exercée par ladite au moins une première hélice moins une deuxième poussée P2 exercée par ladite au moins une deuxième hélice soit P1-P2,

- ou à un premier couple TQ1 exercé par ladite au moins une première hélice moins un deuxième couple TQ2 exercé par ladite au moins une deuxième hélice soit TQ1-TQ2.

Selon un autre aspect, ladite phase de régulation peut être mise en œuvre lorsque ledit hélicoptère hybride effectue une phase de vol en croisière.

Une telle phase de vol de croisière peut être détectée de manière usuelle.

Par ailleurs, le braquage avec le système de pilotage automatique dudit au moins un organe aérodynamique de dérive dans une position de consigne peut être réalisé en appliquant une boucle ouverte de régulation.

Outre un procédé, l'invention vise un hélicoptère hybride qui applique ce procédé.

Un tel hélicoptère hybride est muni d'au moins une première hélice et d'au moins une deuxième hélice disposées transversalement de part et d'autre d'une cellule de cet hélicoptère hybride, ledit hélicoptère hybride comportant un rotor de sustentation agencé au dessus de la cellule, ledit hélicoptère hybride comportant au moins un organe aérodynamique de dérive exerçant une portance transversale, ledit au moins un organe aérodynamique de dérive étant mobile en rotation par rapport à un portant dudit hélicoptère hybride,

L'hélicoptère hybride comporte un système de pilotage automatique configuré pour appliquer ce procédé.

Le système de pilotage automatique peut comporter un calculateur de pilotage configuré pour appliquer le procédé de l'invention.

Selon un aspect, le système de pilotage peut comporter au moins un actionneur relié audit au moins un organe aérodynamique de dérive et au calculateur de pilotage.

Le calculateur de pilotage peut être relié mécaniquement à l'actionneur et/ou peut transmettre un signal électrique, optique, analogique ou numérique à l'actionneur pour déplacer ledit au moins un organe aérodynamique de dérive.

Le système de pilotage automatique peut comporter au moins un des organes suivants en au moins un exemplaire reliés au calculateur de pilotage : un senseur de vitesse, un senseur de couple configuré pour mesurer une information relative à un couple exercé par le rotor de sustentation, un premier senseur du premier pas de premières pales de ladite au moins une première hélice, un deuxième senseur du deuxième pas de deuxièmes pales de ladite au moins une deuxième hélice, un senseur de manœuvre pour déterminer si un pilote manœuvre une commande de lacet, un senseur de mesure d'un facteur de charge selon une direction transversale dans un référentiel de l'hélicoptère hybride, un capteur de roulis angulaire mesurant un angle de roulis de l'hélicoptère hybride, un premier et un deuxième capteurs de couple respectivement de ladite au moins une première hélice et de ladite au moins une deuxième hélice, un premier senseur de poussée pour évaluer une première poussée générée par ladite au moins une première hélice, un deuxième senseur de poussée pour évaluer une deuxième poussée générée par ladite au moins une deuxième hélice.

Par exemple, le senseur de vitesse peut mesurer une vitesse d'avancement de l'hélicoptère hybride, soit la vitesse air vraie ou encore la vitesse air indiquée IAS de l'hélicoptère hybride. Ce senseur de vitesse peut être obtenu avec l'instrument de mesure dénommé « AIR DATA COMPUTER » par l'homme du métier en langue anglaise, un système de positionnement par satellites, un système de mesure de pression...

Selon un aspect, le senseur de couple peut par exemple comprendre un couplemètre. Selon une possibilité, un couplemètre peut être agencé sur un mât rotor du rotor de sustentation ou équivalent.

De même, le premier et le deuxième capteurs de couple peuvent comprendre des couplemètres agencés sur un mât d'hélice ou équivalent.

Par exemple, le premier senseur du premier pas peut comprendre un capteur de position qui mesure une position d'un organe mobile commandant le premier pas de la première hélice, par exemple d'une première tige de commande du premier pas. Il en va de même du deuxième senseur du deuxième pas. Par exemple, chaque senseur de pas comprend un capteur connu sous l'acronyme LVDT correspondant à l'expression anglaise « Linear Variable Differential Transformer » ou RVDT correspondant à l'expression anglaise « Rotary Variable Differential Transformer ».

Par ailleurs, le premier senseur de poussée et le deuxième senseur de poussée peuvent comprendre respectivement un premier senseur de traction/compression disposé sur un premier mât de la première hélice et un deuxième senseur de traction/compression disposé sur un deuxième mât de la deuxième hélice. En effet, l'effort mesuré sur chaque mât est l'image de la poussée de l'hélice associée. Ainsi un calculateur peut appliquer au moins une loi fournissant la poussée d'une hélice en fonction de l'effort mesuré.

Selon un autre exemple, le premier senseur de poussée et le deuxième senseur de poussée peuvent comprendre respectivement deux capteurs de mesure de la vitesse de rotation de la première hélice et de la deuxième hélice. En effet, la poussée d'une hélice peut être calculée à l'aide d'une loi prédéterminée fournissant cette poussée en fonction du régime de rotation de l'hélice mesuré avec un capteur de mesure de la vitesse de rotation, de la vitesse d'avancement mesuré avec le senseur de vitesse, de la densité de l'air ainsi que du pas des pales de l'hélice.

Par ailleurs, un senseur de manœuvre peut par exemple comporter un capteur d'effort apte à déterminer si un pilote exerce un effort sur la commande de lacet, et par exemple un capteur d'effort agencé sur un palonnier ou sur un organe relié mécaniquement au palonnier.

Alternativement, un capteur de position ou d'accélération peut par exemple être utilisé.

Le senseur de mesure d'un facteur de charge peut par exemple être muni d'un capteur d'accélération mesurant le facteur de charge de l'hélicoptère hybride selon une direction transversale, à savoir selon une direction sensiblement parallèle à l'axe de tangage de l'hélicoptère hybride.

Selon un autre exemple, le capteur angulaire peut comprendre un inclinomètre ou peut faire partie de l'instrument de mesure dénommé « Attitude and Heading Reference System ».

L'invention et ses avantages apparaîtront avec plus de détails dans le cadre de la description qui suit avec des exemples donnés à titre illustratif en référence aux figures annexées qui représentent :

la figure 1, une vue en perspective d'un hélicoptère hybride selon l'invention,

la figure 2, un schéma illustrant une réalisation d'un système de pilotage automatique selon l'invention,

la figure 3, un logigramme illustrant le procédé de l'invention,

la figure 4, un schéma illustrant un hélicoptère hybride avant le braquage d'un organe aérodynamique de dérive, et

la figure 5, un schéma illustrant un hélicoptère hybride après le braquage d'un organe aérodynamique de dérive.

Les éléments présents dans plusieurs figures distinctes sont affectés d'une seule et même référence.

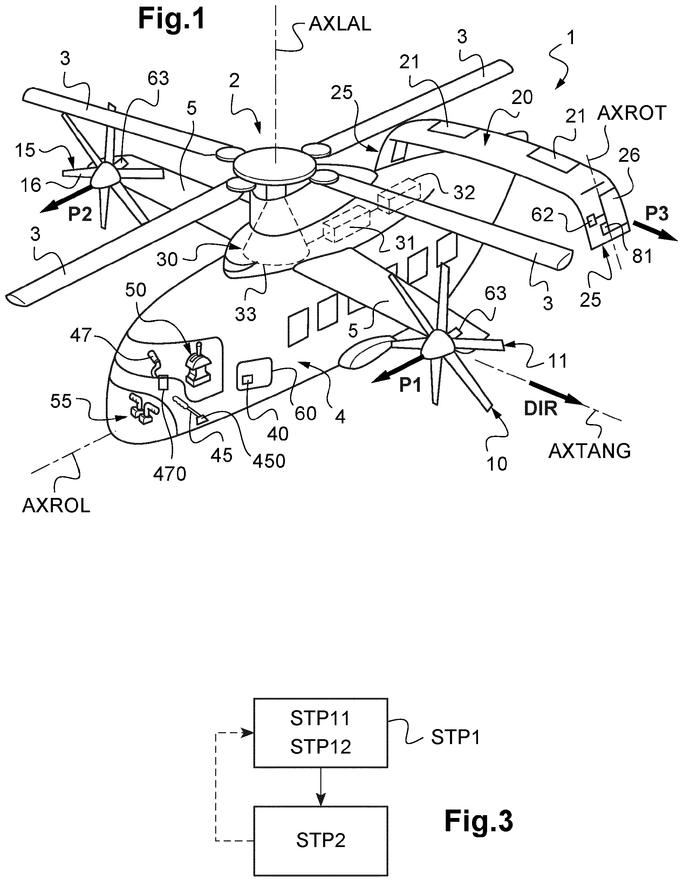

La figure 1 présente un hélicoptère hybride 1 selon l'invention.

Cet hélicoptère hybride 1 comporte une cellule 4 au dessus de laquelle est agencé au moins un rotor de sustentation 2. Ce rotor de sustentation 2 est muni de plusieurs pales dénommées « pales principales 3 » par commodité. La cellule 4 s'étend longitudinalement parallèlement à un axe de roulis AXROL de l'hélicoptère hybride 1, transversalement parallèlement à un axe de tangage AXTANG de l'hélicoptère hybride 1 et en élévation parallèlement à un axe de lacet AXLAL de l'hélicoptère hybride 1.

De plus, l'hélicoptère hybride 1 est pourvu d'au moins une première hélice 10 et d'au moins une deuxième hélice 15, de type tractive ou propulsive. Les première et deuxième hélices 10, 15 comportent respectivement plusieurs premières pales 11 et plusieurs deuxièmes pales 16. La première hélice 10 et la deuxième hélice 15 peuvent être disposées latéralement par rapport à la cellule 4, éventuellement de part et d'autre d'un plan antéropostérieur de symétrie de l'hélicoptère hybride 1 parallèlement à l'axe de tangage AXTANG. Sur la figure 1, les première et deuxième hélices 10, 15 peuvent être inversées. Les première et deuxième hélices 10, 15 sont éventuellement portées par un support 5. Un tel support 5 peut être éventuellement aérodynamique. Par exemple, le support 5 comporte une aile selon l'illustration de la figure 1. Selon la figure 1, les première et deuxième hélices 10, 15 sont disposées au niveau du bord d'attaque d'une aile. Selon un autre exemple, les première et deuxième hélices 10, 15 sont disposées au niveau du bord de fuite de l'aile.

Le premier pas PAS1 des premières pales 11 de la première hélice 10 est réglable pour régler une première poussée P1 de la première hélice 10. De même, le deuxième pas PAS2 des deuxièmes pales 16 de la deuxième hélice 15 est réglable pour régler une deuxième poussée P2 de la deuxième hélice 15. Le premier pas PAS1 peut être égal à une composante de pas moyen plus une composante de pas différentiel alors que le deuxième pas PAS2 peut être égal à la composante de pas moyen moins la composante de pas différentiel, ou inversement.

Par ailleurs, l'hélicoptère hybride 1 comporte une installation motrice 30 pour fournir une puissance au rotor de sustentation 2 et à chaque hélice 10, 15. Cette installation motrice 30 comporte à cet effet au moins un moteur 31 contrôlé par un calculateur moteur 32 usuel.

Le terme « calculateur » désigne de façon générale par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaînes de liaison mécaniques à une boîte de transmission de puissance principale 33 qui entraîne en rotation le rotor de sustentation 2. De plus, la boîte de transmission de puissance principale 33 peut être reliée mécaniquement par au moins un arbre à une boîte de transmission de puissance latérale par hélice qui est donc à son tour reliée à une hélice 10, 15.

Les vitesses de rotation des sorties du ou des moteurs 31, des hélices 10, 15, du rotor de sustentation 2 et du système mécanique d'interconnexion sont éventuellement proportionnelles entre elles, le rapport de proportionnalité étant éventuellement constant quelle que soit la configuration de vol de l'hélicoptère hybride 1 en conditions normales de fonctionnement, à savoir hors cas de panne ou d'essais ou de formation.

Par ailleurs, l'hélicoptère hybride 1 peut comprendre des surfaces de stabilisation voire de manœuvre. Par exemple, l'hélicoptère hybride 1 peut comprendre pour la profondeur au moins un empennage sensiblement horizontal 20 éventuellement avec des gouvernes de profondeur mobiles 21.

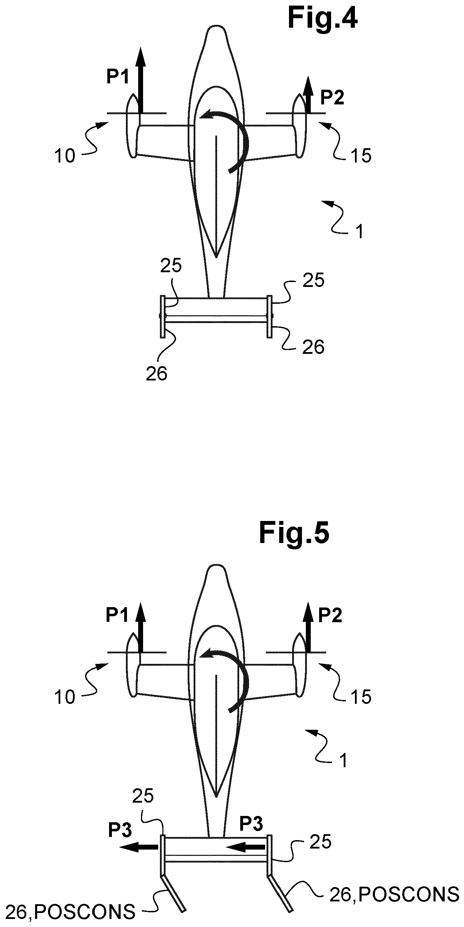

Par exemple, l'hélicoptère hybride 1 peut comprendre pour la direction au moins un organe aérodynamique de dérive 26 exerçant une portance transversale P3, à savoir une portance comportant au moins une composante orientée transversalement et éventuellement sensiblement parallèle à l'axe de tangage de l'hélicoptère hybride. L'organe aérodynamique de dérive 26 est mobile en rotation autour d'un axe de rotation AXROT par rapport à un portant 25. Selon l'exemple illustré, deux organes aérodynamiques de dérive 25 comprennent respectivement deux volets de dérive mobiles chacun par rapport à une portion d'empennage vertical fixe. Selon une autre possibilité, tout un empennage vertical forme un organe aérodynamique de dérive 26 braquable. La figure 1 illustre ainsi des surfaces de stabilisation voire de manœuvre formant une structure arrière en forme de U inversé. Selon un autre exemple illustré sur la figure 4, la structure arrière peut avoir une forme de H. selon un autre exemple, la structure arrière peut avoir une forme en T ou équivalent et/ou peut comprendre un seul organe aérodynamique de dérive 26.

Par ailleurs, l'hélicoptère hybride 1 peut comprendre diverses commandes pour être pilotées par un pilote humain.

En particulier, l'hélicoptère hybride 1 peut comprendre un système de commande pour piloter collectivement et cycliquement le pas des pales principales 3. Un tel système de commande peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3. Le pas des pales principales 3 est dénommé « pas principal » pour être clairement distingué du pas d'autres pales.

Dès lors, l'hélicoptère hybride 1 peut comprendre une commande de pas collectif 45 qui agit directement ou indirectement sur au moins une chaîne de commande mécanique et/ou électrique du système de commande pour faire varier collectivement le pas principal des pales principales 3, via le cas échéant l'ensemble de plateaux cycliques. Par exemple, la commande de pas collectif 45 comporte un levier.

De même, l'hélicoptère hybride 1 peut comprendre une commande de pas cyclique 47 qui agit directement ou indirectement sur une ou plusieurs chaînes de commande mécaniques et/ou électriques du système de commande pour faire varier cycliquement le pas principal des pales principales 3, via le cas échéant l'ensemble de plateaux cycliques.

De manière usuelle, l'hélicoptère hybride 1 peut comprendre des commandes reliées au système de commande pour piloter le premier pas des premières pales 11 et le deuxième pas des deuxièmes pales 16.

De manière usuelle, l'hélicoptère hybride 1 peut comprendre une commande de poussée 50 qui agit directement ou indirectement sur une ou plusieurs chaînes de commande mécaniques et/ou électriques du système de commande pour faire varier la composante de pas moyen du premier pas et du deuxième pas afin par exemple de piloter une vitesse d'avancement de l'hélicoptère hybride 1. La figure 1 illustre une commande de poussée 50 de type levier mais peut aussi prendre la forme d'un bouton générant un signal électrique ou,optique par exemple.

De même, l'hélicoptère hybride 1 peut comprendre une commande de lacet 55 qui agit directement ou indirectement sur une ou plusieurs chaînes de commande de lacet mécaniques et/ou électriques du système de commande pour faire varier la composante de pas différentiel du premier pas des premières pales 11 et du deuxième pas des deuxièmes pales 16. La ou les chaînes de commande de lacet peuvent comprendre au moins un actionneur dénommé par commodité « vérin de lacet 63 ».

Par ailleurs, l'hélicoptère hybride 1 comporte un système de pilotage automatique 60 configuré notamment pour contrôler automatiquement, à savoir sans intervention humaine, le ou les organes aérodynamiques de dérive 26 en appliquant le procédé de l'invention afin d'optimiser le fonctionnement et notamment le point de fonctionnement de la première hélice 10 et de la deuxième hélice 15.

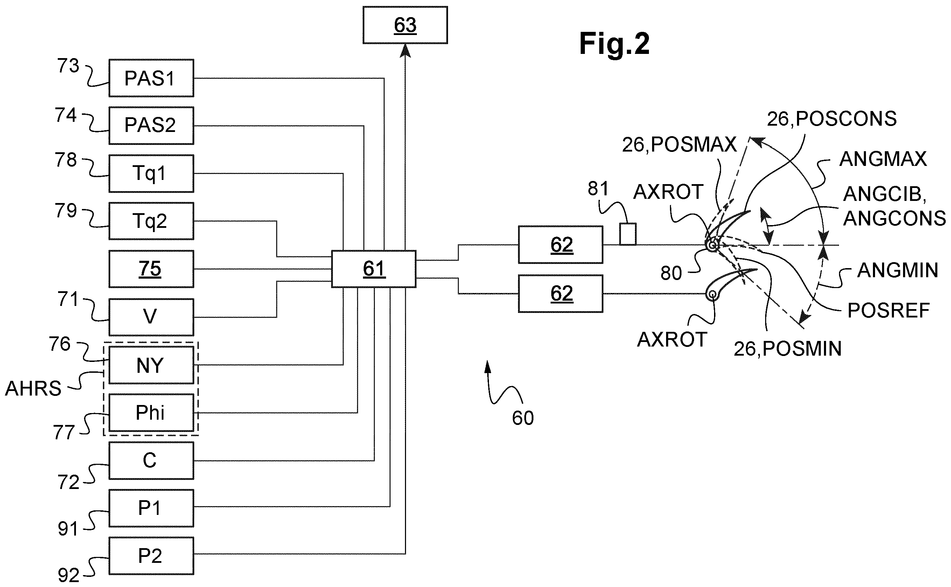

La figure 2 illustre un exemple de système de pilotage automatique 60.

Ce système de pilotage automatique 60 comporte au moins un actionneur 62 relié mécaniquement à au moins un organe aérodynamique de dérive 26. Par exemple, le système de pilotage automatique 60 comporte au moins un actionneur 62 par organe aérodynamique de dérive 26. Chaque actionneur 62 peut comprendre un vérin électrique linéaire ou rotatif, un vérin fluidique linéaire ou rotatif coopérant avec un distributeur de fluide, un moteur électrique linéaire ou rotatif...

Chaque actionneur 62 peut provoquer la rotation d'au moins un organe aérodynamique de dérive 26 autour de son axe de rotation AX. En particulier, chaque actionneur 62 peut provoquer la rotation d'au moins un organe aérodynamique de dérive 26 par rapport à une position de référence POSREF illustrée en pointillés. Selon un exemple, chaque actionneur 62 peut braquer au moins un organe aérodynamique de dérive 26 entre une première position POSMIN présentant un angle minimal ANGMIN négatif par rapport à une position de référence POSREF et une deuxième position POSMAX présentant un angle maximal ANGMAX positif par rapport à la position de référence POSREF. Par exemple, chaque organe aérodynamique de dérive 26 peut être pivoté dans un champ angulaire de plus ou moins 5 de degrés centré sur la position de référence. La position de référence POSREF correspond alors à la position médiane ayant un angle de braquage nul dans laquelle se trouve un organe aérodynamique de dérive 26 par rapport au champ angulaire total pouvant être couvert. La position de référence POSREF peut par exemple correspondre à la position à atteindre durant une phase de croisière à une altitude particulière et avec un réglage particulier du rotor de sustentation pour égaliser la première poussée P1 et la deuxième poussée P2.

A chaque instant, chaque organe aérodynamique de dérive 26 se trouve dans une position courante résultant d'une commande d'un angle de braquage cible qui est déterminé pour tendre à une égalisation de la première poussée P1 et de la deuxième poussée P2.

A cet effet, le système de pilotage automatique 60 peut comporter au moins un calculateur de pilotage 61 commandant chaque actionneur 62. Pour déterminer un signal de commande analogique, numérique, électrique ou optique à transmettre à chaque actionneur 62, le calculateur de pilotage 61 peut recevoir des signaux provenant de divers senseurs.

Dès lors, le système de pilotage automatique 60 peut comprendre un ou plusieurs senseurs de vitesse 71 qui transmettent au calculateur de pilotage 61 un signal analogique, numérique, électrique ou optique porteur d'une vitesse d'avancement de l'hélicoptère hybride 1. Par exemple, le senseur de vitesse mesure une vitesse air vraie de l'hélicoptère hybride 1.

Le système de pilotage automatique 60 peut comprendre un ou plusieurs senseurs de couple 72 qui transmettent au calculateur de pilotage 61 un signal analogique, numérique, électrique ou optique porteur du couple exercé par le rotor de sustentation 2 sur la cellule 4.

Le système de pilotage automatique 60 peut comprendre un premier senseur 73 du premier pas PAS1 des premières pales 11 et un deuxième senseur 74 du deuxième pas PAS2 des deuxièmes pales 16. Par exemple, le premier senseur 73 comporte un capteur de position émettant un signal analogique, numérique, électrique ou optique vers le calculateur de pilotage 61 qui varie en fonction de la position d'un arbre de commande du premier pas des premières pales 11. De même, le deuxième senseur 74 peut comporter un capteur de position émettant un signal analogique, numérique, électrique ou optique vers le calculateur de pilotage 61 qui varie en fonction de la position d'un arbre de commande du deuxième pas des deuxièmes pales 16.

Le calculateur de pilotage 61 peut comporter au moins une loi ou une base de données fournissant la première poussée P1 et la deuxième poussée P2 en fonction respectivement du premier pas PAS1 et du deuxième pas PAS2, du régime de l'hélice et de la vitesse d'avancement.

Selon un autre exemple, le calculateur de pilotage 61 peut comporter au moins une loi ou une base de données fournissant la première poussée P1 et la deuxième poussée P2 en fonction d'efforts mesurés par des capteurs 91, 92 de traction/compression disposés sur les mâts des hélices.

Le système de pilotage automatique 60 peut comprendre un senseur de manœuvre 75 apte à déterminer si un pilote manœuvre la commande de lacet 55. Le senseur de manœuvre 75 émet un signal analogique, numérique, électrique ou optique vers le calculateur de pilotage 61 qui varie en fonction de la position ou d'un effort exercé sur la commande de lacet 55. Par exemple, le senseur de manœuvre 75 comporte un capteur d'effort par exemple intégré dans un vérin de commande du palonnier. Le senseur de manœuvre 75 renvoie un signal booléen « VRAI » lorsque le pilote agit sur le palonnier et un signal booléen « FAUX » lorsque le pilote n'agit pas sur le palonnier.

Le système de pilotage automatique 60 peut comprendre un ou plusieurs senseurs 76 de mesure de facteur de charge Ny selon une direction transversale DIR dans un référentiel de l'hélicoptère hybride 1. Ce senseur 76 de mesure d'un facteur de charge Ny émet un signal analogique, numérique, électrique ou optique vers le calculateur de pilotage 61 qui varie en fonction de ce facteur de charge Ny latéral. Le senseur 76 de mesure d'un facteur de charge peut comprendre un capteur d'accélération mesurant le facteur de charge Ny. Ce capteur d'accélération peut faire partie de l'instrument de mesure dénommé « Attitude and Heading Reference System » (AHRS) ou « Air Data, Attitude and Heading Reference System » (ADAHRS) en langue anglaise.

Le système de pilotage automatique 60 peut comprendre un ou plusieurs capteurs de roulis angulaire 77 qui émettent un signal analogique, numérique, électrique ou optique vers le calculateur de pilotage 61 qui varie en fonction de l'angle de roulis Phi de l'hélicoptère hybride 1. Ce capteur de roulis angulaire 77 peut faire partie de l'instrument de mesure dénommé « Attitude and Heading Reference System » (AHRS) ou « Air Data, Attitude and Heading Reference System » (ADAHRS) en langue anglaise.

Le système de pilotage automatique 60 peut comprendre au moins un premier et un deuxième capteurs de couple 78, 79 pour mesurer respectivement un premier couple Tq1 de ladite au moins une première hélice 10 et un deuxième couple Tq2 de ladite au moins une deuxième hélice 15. Chaque capteur de couple 78, 79 émet un signal analogique, numérique, électrique ou optique vers le calculateur de pilotage 61 qui varie en fonction du couple généré ou produit par l'hélice 10, 15 associée.

Eventuellement le système de pilotage automatique 60 peut comprendre un capteur par organe aérodynamique de dérive 26, tel que par exemple un capteur angulaire 80 ou un capteur 81 estimant la position soit d'un organe mobile de l'actionneur 62 associé ou soit d'un lien reliant l'actionneur 62 et l'organe aérodynamique de dérive 26.

Si nécessaire, et donc en fonction de la logique programmée dans le calculateur de pilotage 61, ce calculateur de pilotage 61 ordonne durant une phase de régulation à chaque actionneur 62 de basculer l'organe aérodynamique de dérive 26 associé dans une position de consigne POSCONS présentant un angle de braquage cible ANGCIB avec la position de référence POSREF. L'angle de braquage cible ANGCIB est fonction d'un angle de braquage de consigne ANGCONS voire de l'angle maximal ANGMAX et de l'angle minimal ANGMIN.

En référence à la figure 3, le procédé de l'invention comporte une phase de régulation STP1. Selon une possibilité, la phase de régulation est en permanence mise en œuvre. Selon une autre possibilité, la phase de régulation est mise en œuvre uniquement lors d'une phase de vol en croisière. Une telle phase de vol en croisière peut être identifiée par le calculateur de pilotage 61 de manière usuelle, par exemple si l'hélicoptère hybride 1 a une vitesse d'avancement supérieure à un seuil de vitesse mémorisé/prédéterminé. Ainsi, le procédé peut comporter une étape de comparaison de la vitesse d'avancement au seuil de vitesse, la phase de régulation étant entreprise si la vitesse d'avancement est supérieure à ce seuil de vitesse. Par exemple, un tel seuil de vitesse peut être égal à 100 nœuds soit 185,2 kilomètres par heure. Dans ce cas de figure, en dehors de la phase de régulation, chaque organe aérodynamique de dérive 26 peut par exemple être positionné dans une position prédéterminée, et à titre illustratif dans la deuxième position POSMAX par exemple.

La phase de régulation peut être réalisée de manière itérative à une fréquence prédéterminée.

Durant cette phase de régulation STP1, le procédé comporte une étape de braquage STP12 avec le système de pilotage automatique 60 de chaque organe aérodynamique de dérive 26 dans la position de consigne POSCONS. L'angle de braquage cible ANGCIB à atteindre est alors égal à un angle de braquage de consigne ANGCONS, au moins lorsque cet angle de braquage de consigne ANGCONS est compris dans la plage de valeurs autorisées bornée par l'angle minimal ANGMIN et l'angle maximal ANGMAX prédéterminés.

L'angle de braquage de consigne ANGCONS est calculé par le système de pilotage automatique 60 pour correspondre à l'angle à atteindre afin de compenser un couple exercé par ledit rotor de sustentation 2 à dérapage latéral nul avec le ou les organes aérodynamiques de dérive 26 .

Dès lors, la phase de régulation STP1 peut comprendre préalablement à l'étape de braquage STP12 une étape de calcul STP11, avec le système de pilotage automatique 60, de l'angle de braquage de consigne ANGCONS. Le calculateur de pilotage 61 peut appliquer au moins une loi à cet effet, une telle loi pouvant par exemple prendre la forme d'une série d'instructions mémorisées, d'un tableau de valeurs... La valeur de l'angle de braquage de consigne ANGCONS peut dépendre de la vitesse d'avancement de l'hélicoptère hybride 1 mesurée avec le senseur de vitesse 71, du couple exercé par le rotor de sustentation 2 sur la cellule 4 mesuré par le senseur de couple 72, et d'une masse volumique de l'air entourant ledit hélicoptère hybride 1.

Eventuellement, le système de pilotage automatique 60 calcule l'angle de braquage de consigne ANGCONS avec la relation suivante :

$$deltaV=(C/(0.5*ro*v²)-N1)/(N2),$$

où « deltaV » représente ledit angle de braquage de consigne ANGCONS, « C » représente un couple exercé par le rotor de sustentation 2 sur la cellule 4, « V² » une vitesse d'avancement de l'hélicoptère hybride 1 à la puissance deux, « ro » représente une masse volumique de l'air, « 0.5*ro*v2 » représente une pression dynamique, « N1 » représente un premier coefficient fonction d'un moment aérodynamique N0 de lacet de l'hélicoptère hybride 1 à dérapage nul et lorsque ledit au moins un organe aérodynamique de dérive 26 est dans la position de référence POSREF réduit par la pression dynamique q, « N2 » représente une constante, « / » représente le signe de la division, « - » représente le signe de la soustraction, « * » représente le signe de la multiplication, « = » représente le signe de l'égalité.

L'angle de braquage de consigne peut être borné par un angle minimal ANGMIN et un angle maximal ANGMAX.

Le premier coefficient peut être égal au moment aérodynamique de lacet N0 de l'hélicoptère hybride 1 à dérapage nul et lorsque ledit au moins un organe aérodynamique de dérive 26 est dans la position de référence POSREF réduit par la pression dynamique q soit N1=N0/q. Dès lors, le premier coefficient peut être une constante évaluée par essais et/ou calculs et/ou simulations.

Alternativement, ce moment aérodynamique de lacet N0 de l'hélicoptère hybride 1 à dérapage nul et lorsque ledit au moins un organe aérodynamique de dérive 26 est dans la position de référence POSREF réduit par la pression dynamique q peut être corrigé par un correcteur de type intégral éventuellement écrêté.

Par exemple, ledit premier coefficient est déterminé par la relation suivante :

$$N1=(N0/q)+k*int(diff),$$

où « N1 » représente le premier coefficient, « N0/q » représente le coefficient aérodynamique de lacet de l'hélicoptère hybride 1 réduit par la pression dynamique à dérapage nul et lorsque ledit au moins un organe aérodynamique de dérive 26 est dans la position de référence POSREF, « diff » représente une soustraction égale soit au premier pas PAS1 des premières pales 11 moins un deuxième pas PAS2 des deuxièmes pales soit à une première poussée P1 exercée par ladite au moins une première hélice 10 moins une deuxième poussée P2 exercée par ladite au moins une deuxième hélice 15 soit à un premier couple Tq1 exercé par ladite au moins une première hélice 10 moins un deuxième couple Tq2 exercé par ladite au moins une deuxième hélice,, « k » représente un gain prédéterminé, « - » représente le signe de la soustraction, « + » représente le signe de l'addition, « * » représente le signe de la multiplication, « = » représente le signe de l'égalité, « k*int(diff) » représente le correcteur de type intégral égal au produit dudit gain prédéterminé et d'une intégrale par rapport au temps de la soustraction

En fonction de la variante, ledit premier coefficient est donc déterminé par la relation suivante :

$$N1=(N0/q)+k*int(PAS1-PAS2),$$

ou

$$N1=(N0/q)+k*int(P1-P2),$$

ou

$$N1=(N0/q)+k*int(Tq1-Tq2).$$

Quelle que soit la variante, le gain k peut être fixe ou variable. Par exemple, le gain k varie en fonction d'une vitesse d'avancement de l'hélicoptère hybride 1.

En outre, le correcteur peut être figé lorsque l'hélicoptère hybride 1 entre dans une phase de pilotage dynamique. Le calculateur de pilotage 61 estime éventuellement qu'une telle phase de pilotage dynamique est mise en œuvre tant qu'au moins une des trois conditions suivantes est satisfaite :

- manœuvre de la commande de lacet 55, cette manœuvre étant identifiée via un signal émis par le senseur de manœuvre 75,

- la valeur absolue du facteur de charge Ny selon la direction transversale DIR est supérieure à un seuil de facteur de charge, ce facteur de charge étant mesuré par le senseur 76 de mesure d'un facteur de charge,

- la valeur absolue de l'angle de roulis de l'hélicoptère hybride 1 est supérieure à un seuil de roulis, cet angle de roulis étant mesuré par le capteur de roulis angulaire 77.

De manière alternative ou complémentaire, le correcteur peut être figé lorsqu'une valeur absolue d'une différence est inférieure à un seuil de figement. Cette différence peut être égale au premier pas PAS1 moins le deuxième pas PAS2, ou à la première poussée P1 moins la deuxième poussée P2, ou au premier couple exercé par ladite au moins une première hélice 10 moins le deuxième couple exercé par ladite au moins une deuxième hélice 15.

Par suite et en référence à la figure 4, avant la phase de régulation chaque organe aérodynamique de dérive 26 peut être dans une position ne permettant pas d'égaliser la première poussée P1 et la deuxième poussée P2.

En référence à la figure 5, lors de la mise en œuvre de la phase de régulation, chaque organe aérodynamique de dérive 26 est braqué dans sa position de consigne POSCONS via une boucle ouverte de régulation ce qui permet donc d'égaliser la première poussée P1 et la deuxième poussée P2.

En parallèle, le procédé peut mettre en œuvre une étape STP2 de régulation du facteur de charge latéral Ny. A cet effet, le calculateur de pilotage 61 peut transmettre un signal à au moins un vérin de lacet 63, ce signal étant déterminé par une boucle fermée de régulation rapide usuelle.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé pour optimiser le fonctionnement d'au moins une première hélice (10) et d'au moins une deuxième hélice (15) disposées transversalement de part et d'autre d'une cellule (4) d'un hélicoptère hybride (1), ledit hélicoptère hybride (1) comportant un rotor de sustentation (2) agencé au dessus de la cellule (4), ledit hélicoptère hybride (1) comportant au moins un organe aérodynamique de dérive (26) exerçant une portance transversale, ledit au moins un organe aérodynamique de dérive (26) étant mobile en rotation par rapport à un portant (25) dudit hélicoptère hybride (1), ledit procédé comportant l'étape suivante durant une phase de régulation : braquage (STP12) avec un système de pilotage automatique (60) dudit au moins un organe aérodynamique de dérive dans une position de consigne (POSCONS) présentant par rapport à une position de référence (POSREF) un angle de braquage cible (ANGCIB),
**caractérisé en ce que** ledit angle de braquage cible (ANGCIB) est égal à un angle de braquage de consigne (ANGCONS) au moins lorsque cet angle de braquage de consigne (ANGCONS) est compris dans une plage délimitée par un angle minimal (ANGMIN) inclus et un angle maximal (ANGMAX) inclus prédéterminés, ledit angle de braquage de consigne (ANGCONS) étant calculé par le système de pilotage automatique (60) pour compenser un couple exercé par ledit rotor de sustentation (2) à dérapage latéral nul.

2. Procédé selon la revendication 1, **caractérisé en ce que** ledit procédé comporte l'étape suivante : calcul (STP11) avec le système de pilotage automatique (60) dudit angle de braquage de consigne (ANGCONS) en fonction au moins d'une vitesse d'avancement de l'hélicoptère hybride, d'un couple exercé par le rotor de sustentation (2) sur la cellule (4), et d'une masse volumique de l'air entourant ledit hélicoptère hybride.

3. Procédé selon l'une quelconque des revendications 1 à 2, **caractérisé en ce que** ledit procédé comporte une étape de calcul (STP11) avec le système de pilotage automatique (60) dudit angle de braquage de consigne (ANGCONS) par la relation suivante :

$$deltaV=(C/(0.5*ro*v^2)-N1)/(N2),$$

où « deltaV » représente ledit angle de braquage de consigne (ANGCONS), « C » représente un couple exercé par le rotor de sustentation (2) sur la cellule (4), « $V^2$ » représente une vitesse d'avancement de l'hélicoptère hybride (1) à la puissance deux, « ro » représente une masse volumique de l'air, « $0.5*ro*v2$ » représente une pression dynamique, « N1 » représente un premier coefficient fonction d'un moment aérodynamique (N0) de lacet de l'hélicoptère hybride (1) à dérapage nul et lorsque ledit au moins un organe aérodynamique de dérive (26) est dans la position de référence (POSREF) réduit par la pression dynamique, « N2 » représente un deuxième coefficient égal à une constante, « / » représente le signe de la division, « - » représente le signe de la soustraction, « * » représente le signe de la multiplication, « = » représente le signe de l'égalité.

4. Procédé selon la revendication 3, **caractérisé en ce que** ledit premier coefficient est égal au moment aérodynamique (N0) de lacet de l'hélicoptère hybride (1), réduit par la pression dynamique (q), à dérapage nul et lorsque ledit au moins un organe aérodynamique de dérive (26) est dans la position de référence (POSREF).

5. Procédé selon la revendication 3, **caractérisé en ce que** ledit premier coefficient est égal au moment aérodynamique de lacet de l'hélicoptère hybride (1), réduit par la pression dynamique et corrigé par un correcteur de type intégral, à dérapage nul et lorsque ledit au moins un organe aérodynamique de dérive (26) est dans la position de référence (POSREF) ; ce correcteur étant fonction d'un gain ainsi que d'une soustraction soit d'un premier pas de premières pales (11) de ladite au moins une première hélice (10) moins un deuxième pas de deuxièmes pales (16) de ladite au moins une deuxième hélice (15) soit d'une première poussée (P1) exercée par ladite au moins une première hélice (10) moins une deuxième poussée (P2) exercée par ladite au moins une deuxième hélice (15) soit d'un premier couple exercé par ladite au moins une première hélice (10) moins un deuxième couple exercé par ladite au moins une deuxième hélice (15).

6. Procédé selon la revendication 5,

    **caractérisé en ce que** ledit premier coefficient est déterminé par la relation suivante :

$$N1 = (N0/q) + k*int(diff),$$

    où « N1 » représente le premier coefficient, « N0/q » représente le moment aérodynamique N0 de lacet de l'hélicoptère hybride (1), réduit par la pression dynamique q, à dérapage nul et lorsque ledit au moins un organe aérodynamique de dérive (26) est dans la position de référence (POSREF), « diff » représente ladite soustraction, « k » représente un gain prédéterminé, « - » représente le signe de la soustraction, « + » représente le signe de l'addition, « * » représente le signe de la multiplication, « = » représente le signe de l'égalité, « k*int(diff) » représente le correcteur de type intégral égal au produit dudit gain prédéterminé et d'une intégrale par rapport au temps de ladite soustraction.

7. Procédé selon l'une quelconque des revendications 5 à 6, **caractérisé en ce que** ledit gain (k) varie en fonction d'une vitesse d'avancement de l'hélicoptère hybride (1).

8. Procédé selon l'une quelconque des revendications 5 à 7, **caractérisé en ce que** ledit correcteur est figé lorsque l'hélicoptère hybride (1) est dans une phase de pilotage dynamique.

9. Procédé selon la revendication 8, **caractérisé en ce que** le procédé comporte une étape de détection d'une phase de pilotage dynamique si au moins une des conditions suivantes est satisfaite :

    - manœuvre d'une commande de lacet (55) configurée pour modifier une composante de pas différentiel du premier pas des premières pales (11) de ladite au moins une première hélice (10) et du deuxième pas des deuxièmes pales (16) de ladite au moins une deuxième hélice (15),
    - une valeur absolue d'un facteur de charge selon une direction transversale (DIR) dans un référentiel de l'hélicoptère hybride (1) est supérieure à un seuil de facteur de charge,
    - une valeur absolue d'un angle de roulis de l'hélicoptère hybride (1) est supérieure à un seuil de roulis.

10. Procédé selon l'une quelconque des revendications 5 à 9, **caractérisé en ce que** ledit correcteur est figé lorsqu'une valeur absolue d'une différence est inférieure à un seuil de figement, ladite différence étant égale :

    - au premier pas des premières pales (11) de ladite au moins une première hélice (10) moins le deuxième pas des deuxièmes pales (16) de ladite au moins une deuxième hélice (15),
    - ou à la première poussée (P1) exercée par ladite au moins une première hélice (10) moins la deuxième poussée (P2) exercée par ladite au moins une deuxième hélice (15),
    - ou au premier couple exercé par ladite au moins une première hélice (10) moins le deuxième couple exercé par ladite au moins une deuxième hélice (15).

11. Procédé selon l'une quelconque des revendications 1 à 10,
    **caractérisé en ce que** ladite phase de régulation est mise en œuvre lorsque ledit hélicoptère hybride (1) effectue une phase de vol en croisière.

12. Procédé selon l'une quelconque des revendications 1 à 11,
    **caractérisé en ce que** ledit braquage (STP12) avec le système de pilotage automatique (60) dudit au moins un organe aérodynamique de dérive (26) dans une position de consigne (POSCONS) est réalisé en appliquant une boucle ouverte de régulation.

13. Hélicoptère hybride (1) muni d'au moins une première hélice (10) et d'au moins une deuxième hélice (15) disposées transversalement de part et d'autre d'une cellule (4) de cet hélicoptère hybride (1), ledit hélicoptère hybride (1) comportant un rotor de sustentation (2) agencé au dessus de la cellule (4), ledit hélicoptère hybride (1) comportant au moins un organe aérodynamique de dérive (26) exerçant une portance transversale (P3), ledit au moins un organe aérodynamique de dérive (26) étant mobile en rotation par rapport à un portant (25) dudit hélicoptère hybride (1),
    **caractérisé en ce que** ledit hélicoptère hybride (1) comporte un système de pilotage automatique (60) configuré pour appliquer le procédé selon l'une quelconque des revendications 1 à 12, ledit système de pilotage automatique (60) comportant un calculateur de pilotage (61) configuré pour appliquer le procédé selon l'une quelconque des revendications 1 à 12, le système de pilotage automatique (60) comportant au moins un actionneur (62) relié audit au moins un organe aérodynamique de dérive (26) et au calculateur de pilotage (61).

14. Hélicoptère hybride selon la revendication 13, **caractérisé en ce que** ledit système de pilotage automatique (60) comporte au moins un des organes suivants, en au moins un exemplaire, reliés au calculateur de pilotage (61) : un senseur de vitesse (71), un senseur de couple (72) configuré pour mesurer une information relative à un couple exercé par le rotor de sustentation (2), un premier senseur (73) du premier pas de premières pales (11) de ladite au moins une première hélice (10), un deuxième senseur (74) du deuxième pas de deuxièmes pales (16) de ladite au moins une deuxième hélice (15), un senseur de manœuvre (75) pour déterminer si un pilote manœuvre une commande de lacet (55), un senseur (76) de mesure d'un facteur de charge selon une direction transversale dans un référentiel de l'hélicoptère hybride (1), un capteur de roulis angulaire (77) mesurant un angle de roulis de l'hélicoptère hybride (1), un premier et un deuxième capteurs de couple (78, 79) respectivement de ladite au moins une première hélice (10) et de ladite au moins une deuxième hélice (15), un premier senseur de poussée pour évaluer une première poussée (P1) générée par ladite au moins une première hélice (10), un deuxième senseur de poussée pour évaluer une deuxième poussée (P2) générée par ladite au moins une deuxième hélice (15).

## Patentansprüche

1. Verfahren zur Optimierung des Betriebs von mindestens einem ersten Propeller (10) und mindestens einem zweiten Propeller (15), die quer zu beiden Seiten einer Kabine (4) eines Hybridhubschraubers (1) angeordnet sind, wobei der Hybridhubschrauber (1) einen über der Kabine (4) angeordneten Auftriebsrotor (2) aufweist, wobei der Hybridhubschrauber (1) mindestens ein aerodynamisches Seitenleitwerk (26) aufweist, das einen Quertrieb erzeugt, wobei das mindestens eine aerodynamische Seitenleitwerk (26) in Bezug auf einen Träger (25) des Hybridhubschraubers (1) drehbar ist, wobei das Verfahren während einer Regelungsphase den folgenden Schritt umfasst: Lenken (STP12) des mindestens einen aerodynamischen Seitenleitwerks durch ein automatisches Steuerungssystem (60) in eine Sollposition (POSCONS), die in Bezug auf eine Referenzposition (POSREF) einen Ziellenkwinkel (ANGCIB) aufweist,
**dadurch gekennzeichnet, dass** der Ziellenkwinkel (ANGCIB) mindestens dann gleich einem Solllenkwinkel (ANGCONS) ist, wenn dieser Solllenkwinkel (ANGCONS) in einem Bereich liegt, der durch einen mit umfassten vorgegebenen minimalen Winkel (ANGMIN) und einen mit umfassten vorgegebenen maximalen Winkel (ANGMAX) begrenzt ist, wobei der Soll-Lenkwinkel (ANGCONS) vom automatischen Steuerungssystem (60) berechnet wird, um ein von dem Auftriebsrotor (2) ausgeübtes Drehmoment bei verschwindendem seitlichem Schlupf auszugleichen.

2. Verfahren nach Anspruch 1,
**dadurch gekennzeichnet, dass** das Verfahren den folgenden Schritt umfasst:
Berechnen (STP11) des Solllenkwinkels (ANGCONS) durch das automatische Steuerungssystem (60) in Abhängigkeit mindestens von einer Vorwärtsgeschwindigkeit des Hybridhubschraubers, einem vom Auftriebsrotor (2) auf die Kabine (4) ausgeübten Drehmoment und einer Dichte der den Hybridhubschrauber umgebenden Luft.

3. Verfahren nach einem der Ansprüche 1 bis 2,
**dadurch gekennzeichnet, dass** das Verfahren einen Schritt (STP11) des Berechnens des Solllenkwinkels (ANGCONS) durch das automatische Steuerungssystem (60) nach folgender Beziehung umfasst:

$$deltaV = (C/(0.5*ro*v^2)-N1)/(N2),$$

wobei "deltaV" den Solllenkwinkel (ANGCONS) bezeichnet, "C" ein vom Hubrotor (2) auf die Kabine (4) ausgeübtes Drehmoment bezeichnet, "$v^2$" das Quadrat einer Vorwärtsgeschwindigkeit des Hybridhubschraubers (1) bezeichnet, "ro" eine Luftdichte bezeichnet, "$0.5*ro*v^2$" einen Staudruck bezeichnet, "N1" einen ersten Koeffizienten bezeichnet, der abhängt von einem aerodynamischen Giermoment (N0) des Hybridhubschraubers (1) bei verschwindendem Schlupf und wenn sich das mindestens eine aerodynamische Seitenleitwerk (26) in der Referenzposition (POSREF) befindet, vermindert durch den Staudruck, "N2" einen zweiten Koeffizienten bezeichnet, der gleich einer Konstante ist, "/" das Divisionszeichen bezeichnet, "-" das Subtraktionszeichen bezeichnet, "*" das Multiplikationszeichen bezeichnet, "=" das Gleichheitszeichen bezeichnet.

4. Verfahren nach Anspruch 3,
**dadurch gekennzeichnet, dass** der erste Koeffizient gleich dem aerodynamischen Giermoment (N0) des Hybridhubschraubers (1) ist, dividiert durch den Staudruck (q), bei verschwindendem Schlupf und wenn sich das mindestens eine aerodynamische Seitenleitwerk (26) in der Referenzposition (POSREF) befindet.

5. Verfahren nach Anspruch 3, **dadurch gekennzeichnet, dass** der erste Koeffizient gleich dem aerodynamischen Giermoment des Hybridhubschraubers (1) ist, dividiert durch den Staudruck und korrigiert durch einen Korrekturterm vom Integraltyp, bei verschwindendem Schlupf und wenn sich das mindestens eine aerodynamische Seitenleitwerk (26) in der Referenzposition (POSREF) befindet; wobei dieser Korrekturterm von einer Verstärkung sowie einer Differenz abhängt, entweder von einer ersten Steigung von ersten Blättern (11) des mindestens einen ersten Propellers (10) minus einer zweiten Steigung von zweiten Blättern (16) des mindestens einen zweiten Propellers (15) oder von einem von dem mindestens einen ersten Propeller (10) ausgeübten ersten Schub (P1) minus einem von dem mindestens einen zweiten Propeller (15) ausgeübten zweiten Schub (P2), oder von einem von dem mindestens einen ersten Propeller (10) ausgeübten ersten Drehmoment minus einem von dem mindestens einen zweiten Propeller (15) ausgeübten zweiten Drehmoment.

6. Verfahren nach Anspruch 5, **dadurch gekennzeichnet, dass** der erste Koeffizient durch die folgende Beziehung bestimmt wird:

$$N1 = (N0/q) + k * int(diff),$$

wobei "N1" den ersten Koeffizienten bezeichnet, "N0/q" das aerodynamische Giermoment N0 des Hybridhubschraubers (1) bezeichnet, dividiert durch den Staudruck q bei verschwindendem Schlupf und wenn sich das mindestens eine aerodynamische Seitenleitwerk (26) in der Referenzposition (POSREF) befindet, "diff" die Differenz bezeichnet, "k" eine vorgegebene Verstärkung bezeichnet, "-" das Subtraktionszeichen, "+" das Additionszeichen, "*" das Multiplikationszeichen, "=" das Gleichheitszeichen, "k*int(diff)" den Korrekturterm vom Integraltyp, der gleich dem Produkt der vorgegebenen Verstärkung und eines Zeitintegrals der Differenz ist, darstellt.

7. Verfahren nach einem der Ansprüche 5 bis 6, **dadurch gekennzeichnet, dass** sich die Verstärkung (k) in Abhängigkeit von der Vorwärtsgeschwindigkeit des Hybridhubschraubers (1) ändert.

8. Verfahren nach einem der Ansprüche 5 bis 7, **dadurch gekennzeichnet, dass** der Korrektor eingefroren wird, wenn sich der Hybridhubschrauber (1) in einer dynamischen Steuerphase befindet.

9. Verfahren nach Anspruch 8, **dadurch gekennzeichnet, dass** das Verfahren einen Schritt zur Erkennung einer dynamischen Steuerphase umfasst, wenn mindestens eine der folgenden Bedingungen erfüllt ist:

   - Betätigung einer Giersteuerung (55), die konfiguriert ist, um eine Differentialsteigungskomponente der ersten Steigung der ersten Blätter (11) des mindestens einen ersten Propellers (10) und der zweiten Steigung der zweiten Blätter (16) des mindestens einen zweiten Propellers (15) zu ändern,
   - ein Absolutwert eines Lastfaktors in einer Querrichtung (DIR) in einem Bezugssystem des Hybridhubschraubers (1) ist größer als ein Lastfaktorschwellenwert,
   - ein Absolutwert eines Rollwinkels des Hybridhubschraubers (1) ist größer als ein Rollschwellenwert.

10. Verfahren nach einem der Ansprüche 5 bis 9, **dadurch gekennzeichnet, dass** der Korrekturterm eingefroren wird, wenn ein Absolutwert einer Differenz unter einem Einfrierschwellenwert liegt, wobei die Differenz gleich ist:

    - der ersten Steigung der ersten Blätter (11) des mindestens einen ersten Propellers (10) minus der zweiten Steigung der zweiten Blätter (16) des mindestens einen zweiten Propellers (15),
    - oder dem von dem mindestens einen ersten Propeller (10) ausgeübten ersten Schub (P1) abzüglich des von dem mindestens einen zweiten Propeller (15) ausgeübten zweiten Schubs (P2),
    - oder dem von dem mindestens einen ersten Propeller (10) ausgeübten ersten Drehmoment abzüglich des von dem mindestens einen zweiten Propeller (15) ausgeübten zweiten Drehmoments.

11. Verfahren nach einem der Ansprüche 1 bis 10, **dadurch gekennzeichnet, dass** die Regelungsphase durchgeführt wird, wenn sich der Hybridhubschrauber (1) in einer Reiseflugphase befindet.

12. Verfahren nach einem der Ansprüche 1 bis 11, **dadurch gekennzeichnet, dass** das Lenken (STP12) des mindestens einen aerodynamischen Seitenleitwerks (26) in eine Sollposition (POSCONS) mit dem automatischen Steuerungssystem (60) durch Anwendung einer offenen Regelschleife erfolgt.

13. Hybridhubschrauber (1) mit mindestens einem ersten Propeller (10) und mindestens einem zweiten Propeller (15), die quer zu beiden Seiten einer Kabine (4) dieses Hybridhubschraubers (1) angeordnet sind, wobei der Hybridhubschrauber (1) einen über der Kabine (4) angeordneten Auftriebsrotor (2) umfasst, wobei der Hybridhubschrauber (1) mindestens ein aerodynamisches Seitenleitwerk (26) aufweist, das einen Quertrieb (P3) erzeugt, wobei das mindestens eine aerodynamische Seitenleitwerk (26) in Bezug auf einen Träger (25) des Hybridhubschraubers (1) drehbar ist,
**dadurch gekennzeichnet, dass** der Hybridhubschrauber (1) ein automatisches Steuerungssystem (60) umfasst, das konfiguriert ist, um das Verfahren gemäß einem der Ansprüche 1 bis 12 auszuführen, wobei das automatische Steuerungssystem (60) einen Steuerungsrechner (61) umfasst, der konfiguriert ist, um das Verfahren gemäß einem der Ansprüche 1 bis 12 auszuführen, wobei das automatische Steuerungssystem (60) mindestens einen Aktuator (62) umfasst, der mit dem mindestens einen aerodynamischen Seitenleitwerk (26) und dem Steuerungscomputer (61) verbunden ist.

14. Hybridhubschrauber nach Anspruch 13,
**dadurch gekennzeichnet, dass** das automatische Steuerungssystem (60) mindestens eines der folgenden Organe in mindestens einem Exemplar und verbunden mit dem Steuerungsrechner (61) umfasst: einen Geschwindigkeitssensor (71), einen Drehmomentsensor (72), der konfiguriert ist, um eine Information bezüglich eines vom Auftriebsrotor (2) ausgeübten Drehmoments zu messen, einen ersten Sensor (73) für die erste Steigung der ersten Blätter (11) des mindestens einen ersten Propellers (10), einen zweiten Sensor (74) für die zweite Steigung der zweiten Blätter (16) des mindestens einen zweiten Propellers (15), einen Manöversensor (75) zur Bestimmung, ob ein Pilot eine Giersteuerung (55) betätigt, einen Sensor (76) zur Messung eines Lastfaktors in einer Querrichtung in einem Bezugssystem des Hybridhubschraubers (1), einen Rollwinkel-Sensor (77), der einen Rollwinkel des Hybridhubschraubers (1) misst, einen ersten und einen zweiten Drehmomentsensor (78, 79) jeweils für den mindestens einen ersten Propeller (10) und den mindestens einen zweiten Propeller (15), einen ersten Schubsensor zur Auswertung eines von dem mindestens einen ersten Propeller (10) erzeugten ersten Schubs (P1), einen zweiten Schubsensor zur Auswertung eines von dem mindestens einen zweiten Propeller (15) erzeugten zweiten Schubs (P2).

**Claims**

1. Method for optimising the functioning of at least one first propeller (10) and at least one second propeller (15), transversally disposed on both sides of an airframe (4) of a hybrid helicopter (1), said hybrid helicopter (1) including a rotor (2) for lift arranged above the airframe (4), said hybrid helicopter (1) including at least one aerodynamic rudder (26) exerting transverse lift, said at least one aerodynamic rudder (26) being mobile in rotation with respect to a support (25) of said hybrid helicopter (1), said method including the following step during a controlling phase: deflection (STP12) with an automatic pilot system (60) of said at least one aerodynamic rudder to a set-point position (POSCONS), the deflection having a target deflection angle (ANGCIB) with respect to a reference position (POSREF),
**characterised in that** said target deflection angle (ANGCIB) is equal to a set-point deflection angle (ANGCONS) at least when this set-point deflection angle (ANGCONS) is within a range delimited by a predetermined included minimum angle (ANGMIN) and a predetermined included maximum angle (ANGMAX), said set-point deflection angle (ANGCONS) being calculated by the automatic pilot system (60) to offset a torque exerted by said rotor (2) for lift at zero sideslip.

2. Method according to claim 1,
**characterised in that** said method includes the following step: calculation (STP11) with the automatic pilot system (60) of said set-point deflection angle (ANGCONS) according to at least one forward travel speed of the hybrid helicopter, a torque exerted by the rotor (2) for lift on the airframe (4) and a density of the air surrounding said hybrid helicopter.

3. Method according to either one of claims 1 to 2,

**characterised in that** said method includes a step (STP11) of calculating with the automatic pilot system (60) said set-point deflection angle (ANGCONS) by the following relation:

$$deltaV=(C/(0.5*ro*v^2)-N1)/(N2),$$

where "deltaV" represents said set-point deflection angle (ANGCONS), "C" represents a torque exerted by the rotor (2) for lift on the airframe (4), "$V^2$" represents a forward travel speed of the hybrid helicopter (1) to the power two, "ro" represents a density of the air, "$0.5*ro*v2$" represents a dynamic pressure, "N1" represents a first coefficient dependent upon an aerodynamic yawing moment (N0) of the hybrid helicopter (1) at zero sideslip and when said at least one aerodynamic rudder (26) is in the reference position (POSREF), moment reduced by the dynamic pressure, "N2" represents a second coefficient equal to a constant, "/" represents the division sign, "-" represents the subtraction sign, "*" represents the multiplication sign, "=" represents the equality sign.

4. Method according to claim 3,
**characterised in that** said first coefficient is equal to the aerodynamic yawing moment (N0) of the hybrid helicopter (1), reduced by the dynamic pressure (q), at zero sideslip and when said at least one aerodynamic rudder (26) is in the reference position (POSREF).

5. Method according to claim 3,
**characterised in that** said first coefficient is equal to the aerodynamic yawing moment of the hybrid helicopter (1), reduced by the dynamic pressure and corrected by an integral type of corrector, at zero sideslip and when said at least one aerodynamic rudder (26) is in the reference position (POSREF); this corrector being dependent on a gain and on a subtraction, either of a first pitch of first blades (11) of said at least one first propeller (10) minus a second pitch of second blades (16) of said at least one second propeller (15), or of a first thrust (P1) exerted by said at least one first propeller (10) minus a second thrust (P2) exerted by said at least one second propeller (15), or of a first torque exerted by said at least one first propeller (10) minus a second torque exerted by said at least one second propeller (15).

6. Method according to claim 5,

    **characterised in that** said first coefficient is determined by the following relation:

$$N1 = (N0/q)+k*int(diff),$$

    where "N1" represents the first coefficient, "N0/q" represents the aerodynamic yawing moment N0 of the hybrid helicopter (1), reduced by the dynamic pressure q, at zero sideslip and when said at least one aerodynamic rudder (26) is in the reference position (POSREF), "diff" represents said subtraction, "k" represents a predetermined gain, "-" represents the subtraction sign, "+" represents the addition sign, "*" represents the multiplication sign, "=" represents the equality sign, "k*int(diff)" represents the integral type of corrector equal to the product of said predetermined gain and an integral with respect to the time of said subtraction.

7. Method according to either one of claims 5 to 6,
**characterised in that** said gain (k) varies according to a forward travel speed of the hybrid helicopter (1).

8. Method according to any one of claims 5 to 7,
**characterised in that** said corrector is fixed when the hybrid helicopter (1) is in a phase of dynamic control.

9. Method according to claim 8,
**characterised in that** the method includes a step of detecting a dynamic control phase if at least one of the following conditions is met:

    - operation of a yaw control (55) configured to change a component of differential pitch of the first pitch of the first blades (11) of said at least one first propeller (10) and of the second pitch of the second blades (16) of said at least one second propeller (15),

        - an absolute value of a load factor in a transverse direction (DIR) in a reference frame of the hybrid helicopter (1) is greater than a load factor threshold,
        - an absolute value of a roll angle of the hybrid helicopter (1) is greater than a roll threshold.

10. Method according to any one of claims 5 to 9,
**characterised in that** said corrector is fixed when an absolute value of a difference is lower than a fixing threshold, said difference being equal to:

    - the first pitch of the first blades (11) of said at least one first propeller (10) minus the second pitch of the second blades (16) of said at least one second propeller (15),
    - or the first thrust (P1) exerted by said at least one first propeller (10) minus the second thrust (P2) exerted by said at least one second propeller (15),
    - or the first torque exerted by said at least one first propeller (10) minus the second torque exerted by said at least one second propeller (15).

11. Method according to any one of claims 1 to 10,
**characterised in that** said control phase is implemented when said hybrid helicopter (1) performs a cruise flight phase.

12. Method according to any one of claims 1 to 11,
**characterised in that** said deflection (STP12) with the automatic pilot system (60) of said at least one aerodynamic rudder (26) to a set-point position (POSCONS) is achieved by applying an open control loop.

13. Hybrid helicopter (1) equipped with at least one first propeller (10) and at least one second propeller (15), transversally disposed on both sides of an airframe (4) of this hybrid helicopter (1), said hybrid helicopter (1) including a rotor (2) for lift arranged above the airframe (4), said hybrid helicopter (1) including at least one aerodynamic rudder (26) exerting transverse lift (P3) , said at least one aerodynamic rudder (26) being mobile in rotation with respect to a support (25) of said hybrid helicopter (1),
**characterised in that** said hybrid helicopter (1) includes an automatic pilot system (60) configured to apply the method according to any one of claims 1 to 12, said automatic pilot system (60) including a flight computer (61) configured to apply the method according to any one of claims 1 to 12, the automatic pilot system (60) including at least one actuator (62) connected to said at least one aerodynamic rudder (26) and to the flight computer (61).

14. Hybrid helicopter (1) according to claim 13, **characterised in that** said automatic pilot system (60) includes at least one of each of the following components connected to the flight computer (61): a speed sensor (71), a torque sensor (72) configured to measure any information relating to a torque exerted by the rotor (2) for lift, a first sensor (73) of the first pitch of first blades (11) of said at least one first propeller (10), a second sensor (74) of the second pitch of second blades (16) of said at least one second propeller (15), an operation sensor (75) for determining if a pilot is operating a yaw control (55), a sensor (76) for measuring a load factor in a transverse direction in a reference frame of the hybrid helicopter (1), an angular roll sensor (77) measuring a roll angle of the hybrid helicopter (1), a first and a second torque sensor (78, 79), respectively of said at least one first propeller (10) and said at least one second propeller (15), a first thrust sensor for evaluating a first thrust (P1) generated by said at least one first propeller (10), a second thrust sensor for evaluating a second thrust (P2) generated by said at least one second propeller (15).

**Fig.1**

**Fig.3**

**Fig.2**

EP 3 878 738 B1

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8181901 B
- US 8170728 B
- US 8052094 B
- US 8113460 B
- FR 2943620
- FR 2769284
- FR 3014411
- FR 2689854
- US 2018244369 A